# EUROPÄISCHE PATENTANMELDUNG

(11) **EP 2 163 291 A1**
(43) Veröffentlichungstag der Anmeldung: **17.03.2010**
(21) Anmeldenummer: 09400039.5
(22) Anmeldetag: 27.08.2009
(51) Int. Cl.: B01D 46/06

(54) **Filterstützkorb**

(30) Priorität: 03.09.2008 DE 102008045571
(71) Anmelder: Voss & Eiffert GmbH, 58739 Wickede/Ruhr (DE)
(72) Erfinder: Voss, Reinhold, 58710 Menden (DE)
(74) Vertreter: Dörner, Kötter & Kollegen

(57) **Zusammenfassung**

Die Erfindung betrifft einen Filterstützkorb, bestehend aus Längsstäben (2) und Ringen (3), die über die Länge der Längsstäbe (2) verteilt angeordnet sind. An ihren Stirnseiten sind die Längsstäbe (2) mit mindestens einem Ring (4, 5) versehen sind, wobei wenigstens einer der Ringe (4, 5) mit einem Spalt (6) versehen ist. An den dem Spalt (6) benachbarten Längsstäben (21) ist eine Sicherung (8) vorgesehen.

## Beschreibung

Die Erfindung betrifft einen Filterstützkorb, bestehend aus Längsstäben und Ringen, die über die Länge der Längsstäbe verteilt angeordnet sind und an ihren Stirnseiten mit mindestens einem Ring versehen sind, wobei wenigstens einer der Ringe mit einem Spalt versehen ist.

Stützkörbe für Filterschläuche kommen zur Anwendung bei Filtermedien, zum Beispiel in Kraftwerksanlagen, Müllverbrennungsanlagen und technischen Anlagen, in denen eine Filterung der Zu- oder Abluft erforderlich ist. Die Stützkörbe bestehen aus Längsstäben und Ringen. Die im Kreis angeordneten Längsstäbe umgeben die Ringe, die über die Länge der Längsstäbe verteilt sind. Die Ringe sind mit den Stäben verschweißt. Für die Stützung der Filter ist oft eine sehr große Länge der Stützkörbe erforderlich. Aus produktions- und transporttechnischen Gründen sind die Stützkörbe daher in der Regel zweigeteilt ausgeführt. Der endgültige Stützkorb wird dann vor Ort aus den einzelnen Teilen zusammengesetzt.

Zur Verbindung benachbarter Filterstützkörbe ist es bekannt (vgl. bspw. DE 195 10 131 A1 und DD-PS 204 399), an einem der Körbe zwei parallel zueinander angeordnete Ringe innenliegend anzuschweißen. Der benachbarte Korb weist an seinem freien Ende einen außenliegenden Ring auf, der nicht geschlossen ausgebildet ist. Durch die nicht-geschlossene Ausführung des Ringes ist eine Durchmesserverringerung möglich, sodass bei Zusammenführung der benachbarten Körbe der außenliegende Ring des einen Korbes in den zwischen den beiden innenliegenden Ringen gebildeten Freiraum einfahren kann. Nachteilig bei dieser Art der Verbindung ist, dass der Filterschlauch einem starken Verschleiß unterliegt, da die Längsstäbe des einen Korbes außen liegen, wodurch an den Enden der Längsstäbe scharfe Kanten ausgebildet sind. Zur Beseitigung dieses Nachteils ist es bekannt (vgl. bspw. DE 10 2005 041 521 A1), an einem der Ringe einen Kupplungsring vorzusehen, von dem der Ring des benachbarten Korbes gehalten ist.

Den bekannten Filterstützkörben ist gemeinsam, dass aufgrund der nicht-geschlossenen Ausführung des Ringes der Korb eine gewisse Instabilität aufweist. Dies wirkt sich insbesondere dann nachteilig aus, wenn hohe Kräfte auf den Korb einwirken. Dies kann zu einem unbeabsichtigten Zusammendrücken des Korbes im Bereich der Spalte führen, wodurch die Gefahr besteht, dass sich die Verbindung der beiden benachbarten Körbe selbsttätig löst. Das Problem tritt insbesondere bei Filterkörben auf, die keine kreisrunde Ausbildung haben, sondern beispielsweise eine ovale oder mehreckige Rundform aufweisen.

Hier will die Erfindung Abhilfe schaffen. Der Erfindung liegt die Aufgabe zugrunde, einen Stützkorb für Filterschläuche zu schaffen, der trotz durch einen Spalt unterbrochenen Ringes eine hohe Stabilität aufweist und gleichzeitig eine einfache Verbindung durch Zusammendrücken ermöglicht. Gemäß der Erfindung wird diese Aufgabe dadurch gelöst, dass an den zu dem Spalt benachbarten Längsstäben eine Sicherung vorgesehen ist.

Mit der Erfindung ist ein Filterstützkorb für Filterschläuche geschaffen, der einerseits eine einfache Verbindung benachbarter Stützkorbelemente durch Zusammendrücken ermöglicht, andererseits auch bei Auftreten hoher axialer Kräfte die Stabilität des Korbes und damit die Verbindung benachbarter Körbe gewährleistet.

In Weiterbildung der Erfindung ist die Sicherung entlang der Längsstäbe verschiebbar. Hierdurch ist gewährleistet, dass die Sicherung aus dem Bereich des dem benachbarten Filterstützkorbes zugewandten Ringes entfernbar ist, um ein bestimmungsgemäßes Zusammendrücken zur Verbindung oder zum Lösen benachbarter Filterstützkörbe zu ermöglichen.

Bevorzugt sind an der Sicherung Ösen vorgesehen, in denen die zu dem Spalt benachbarten Längsstäbe geführt sind. Diese Ausbildung ermöglicht eine außerordentlich einfache Handhabung der Sicherung. Es ist nämlich lediglich erforderlich, die Sicherung mit ihren Ösen auf die Längsstäbe auszufädeln, um auf diese Weise die bestimmungsgemäße Funktion der Sicherung bereitzustellen.

Bevorzugt sind die Ösen mittels eines Steges miteinander verbunden. Der Steg zwischen den Ösen stellt die Absicherung gegen Zusammendrücken bereit; durch den Steg ist in gesicherter Position der im Bereich des Spaltes unterbrochene Ring an dem Filterstützkorb geschlossen, so dass ein Zusammendrücken wirksam verhindert ist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die perspektivische Darstellung zweier benachbarter Stützkorbteile;

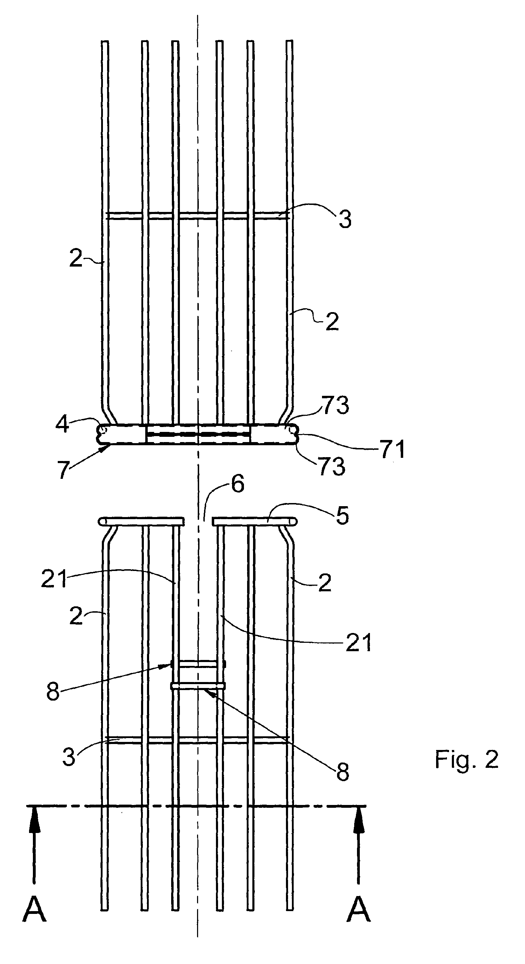

- Fig. 2: den Längsschnitt durch die in Figur 1 dargestellten Stützkorbteile;

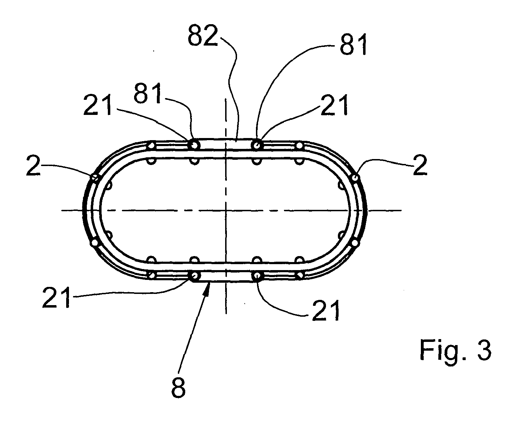

- Fig. 3: den Schnitt entlang der Linie A-A in Figur 2;
- Fig. 4: die perspektivische Darstellung der in Figur 1 dargestellten Stützkorbteile in zusammengebautem Zustand;

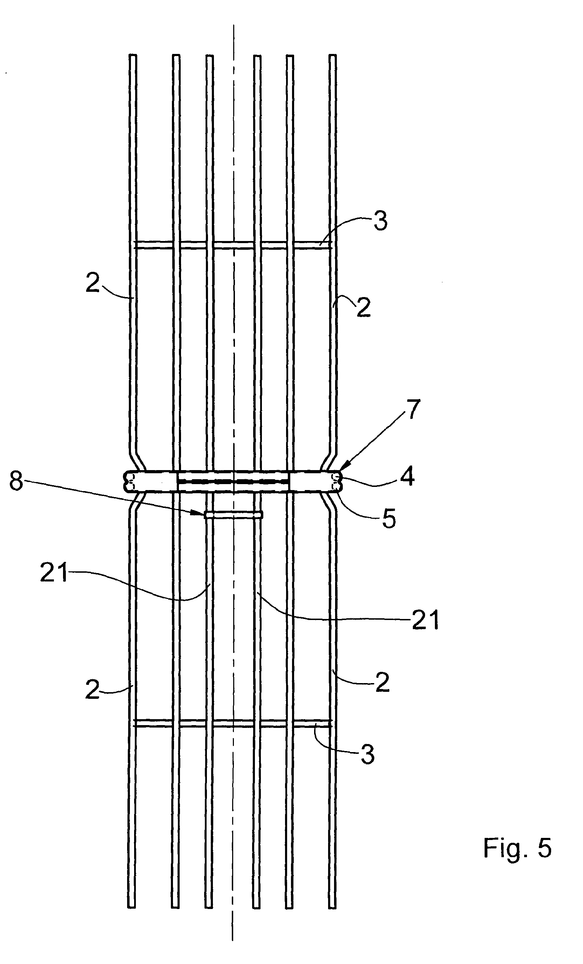

- Fig. 5: den Längsschnitt durch die in Figur 1 dargestellten Stützkorbteile in zusammengebautem Zustand und

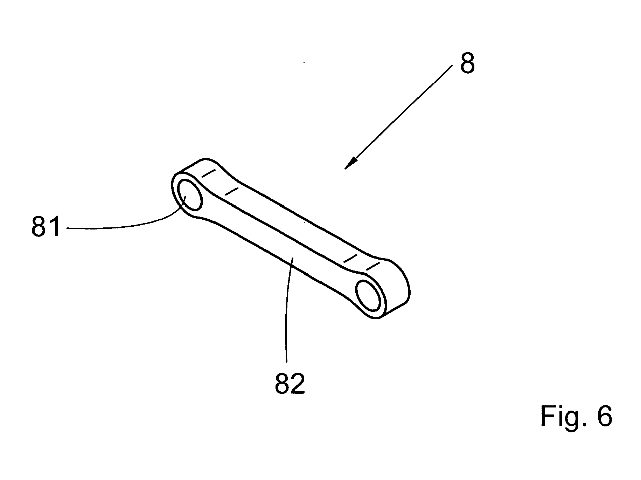

- Fig. 6: die perspektivische Darstellung einer Sicherung.

Als Ausführungsbeispiel ist ein Stützkorb 1 gewählt, der eine ovale Grundform aufweist. Der Stützkorb 1 ist von einem Korboberteil 11 und einem Korbunterteil 12 gebildet. Diese bestehen aus Längsstäben 2 und Ringen 3. Die Längsstäbe 2 umgeben die Ringe 3, die über die Länge der Längsstäbe verteilt sind. Da die Ringe 3 eine ovale Form haben, bildet der Stützkorb 1 insgesamt das Oval nach. Die Ringe 3 sind mit den Längsstäben 2 verschweißt. Sie sind auf der Innenseite der Längsstäbe 2 angeordnet.

An ihren Enden sind die Stäbe 2 eingezogen ausgebildet, woraus eine Verringerung des Umfangs resultiert. Im Bereich des geringsten Umfangs sind an dem Stützkorb-Oberteil 11 sowie dem Stützkorb-Unterteil 12 Ringe 4 und 5 vorgesehen. Die Ringe 4 und 5 weisen den gleichen Umfang auf wie die Ringe 3. Die Ringe 4 und 5 bilden das stirnseitige Ende des jeweiligen Stützkorbteils. Während der Ring 4 ebenso wie die Ringe 3 geschlossen ausgebildet ist, ist der Ring 5 unterbrochen, also nicht geschlossen ausgebildet, wodurch Spalte 6 hervorgerufen sind. Die Spalte 6 sind an den Längsseiten des Rings 5 vorgesehen und sind begrenzt durch zu den Spalten 6 benachbarte Längsstäbe 21. Aufgrund der nicht geschlossenen Ausführung des Ringes 5 ist eine Verringerung des Umfangs dieses Endes des jeweiligen Stützkorbteils möglich.

An dem Stützkorb 1 ist ein Kupplungsring 7 vorgesehen. Der Kupplungsring 7 ist auf dem Ring 4 des jeweiligen Stützkorbteils fixiert, weshalb der Umfang im Inneren des Kupplungsrings 7 im Wesentlichen dem Umfang der Ringe 4 und 5 entspricht. Der Kupplungsring 7 weist eine umlaufende Sicke 71 auf, die auf der Mittellinie des Ringes 7 angeordnet ist und dadurch den Kupplungsring 7 in zwei gleiche Teile teilt, die Aufnahmen 72 und 73 für die Ringe 4 und 5 bilden. Die Aufnahmen 72 und 73 haben einen im Wesentlichen kreisabschnittförmigen Querschnitt. Der Durchmesser der Kreisabschnitte ist gleich der Stärke der Ringe 4 und 5. Die Aufnahme 72 des Kupplungsrings 7 nimmt den Ring 4 auf. Der Kupplungsring 7 ist mit dem Ring 4 verschweißt.

An den zu dem Spalt 6 benachbarten Längsstäben 21 ist eine Sicherung 8 vorgesehen. Die Sicherung 8 ist im Ausführungsbeispiel aus Metall hergestellt; die Sicherung 8 kann auch aus Kunststoff hergestellt sein. Sie ist entlang der Längsstäbe 21 verschiebbar. Hierzu sind an der Sicherung 8 Ösen 81 vorgesehen, in denen die zu dem Spalt 6 benachbarten Längsstäbe 21 geführt sind. Die Ösen 81 sind mittels eines Steges 82 miteinander verbunden. Die Länge des Steges 82 entspricht dem Abstand der Längsstäbe 21 im Ausgangszustand, also ohne Einwirkung einer Kraft auf die Längsstäbe 21.

In Abwandlung des Ausführungsbeispiels ist es möglich, die Ösen 81 in Form von jeweils zwei Halbschalen auszubilden. Die Halbschalen können beispielsweise mit einem Scharnier miteinander verbunden sein und auf der dem Scharnier abgewandten Seite mit einer Rastverbindung versehen sein. Dadurch ist die Möglichkeit gestattet, die Ösen aufzuklappen und auf die Längsstäbe 21 aufzusetzen und im Anschluss daran die Halbschalen durch Schwenken um das Scharnier miteinander zu verrasten, so dass die Sicherung 8 an den Längsstäben 21 befestigt ist. Die Sicherung 8 kann auf diese Weise nachträglich an den Stützkorb 1 angeordnet werden. Ebenso besteht die Möglichkeit, die Ösen 81 selbst als nicht-durchgängige Ringe auszubilden. Beispielsweise können die Ringe einen Umfang von etwa 270° aufweisen. Die Ösen 81 können dann in einfacher Weise auf die Stäbe 21 aufgeclipst werden. Auch hierdurch ist eine nachträgliche Montage der Sicherung 8 sowie eine Demontage möglich.

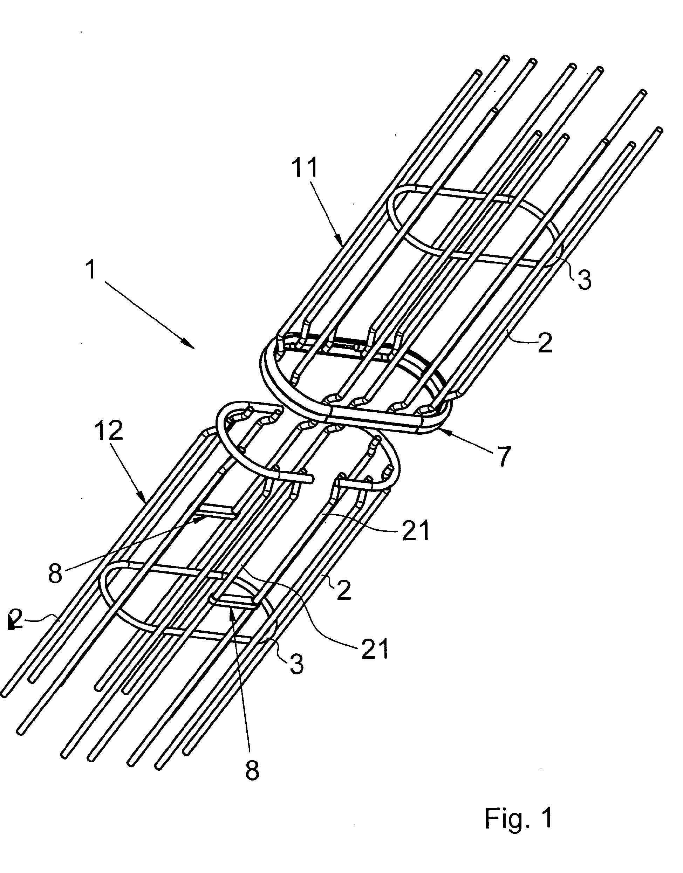

Zur Montage zweier benachbarter Stützkörbe 1 werden die Korbteile 11, 12 koaxial zueinander ausgerichtet, wobei das mit dem Kupplungsring 7 versehene Ende des Stützkorbes dem mit dem Ring 5 versehenen Ende des Stützkorbes zugewandt ist. Zur Montage der Korbteile 11, 12 sind die Sicherungen 8 in einem relativ großen Abstand zu dem Ring 5 positioniert (Figur 1). Das Oberteil 11 und das Unterteil 12 des Stützkorbs 1 werden dann aufeinander zu bewegt. Beim Zusammenführen des Stützkorbunterteils 12 mit dem Stützkorb-oberteil 11 fährt der Ring 5 in den Kupplungsring 7 ein. Dabei taucht der Ring 5 in den Kupplungsring 7 ein. Beim Passieren des äußersten Endes des Kupplungsrings 7 wird der Ring 5 zusammengedrückt, was zu einer radial nach innen ausgerichteten Verschiebung und somit zu einer Verringerung seines Umfangs führt. Eine solche Verringerung des Umfangs ist aufgrund der Spalte 6 in dem Ring 5 ungehindert möglich. Nachdem der Ring 5 die schmalste Stelle des Kupplungsrings 7 passiert hat, dehnt sich dieser wieder aus und fährt in die Aufnahme 73 des Kupplungsrings 7. Er stützt sich dabei allseitig in der Aufnahme 73 ab und ist hierdurch zuverlässig in dem Kupplungsring 7 gehalten. Aufgrund der Sicke 71 sind die Ringe 4 und 5 in montiertem Zustand berührungslos in dem Kupplungsring 7 angeordnet.

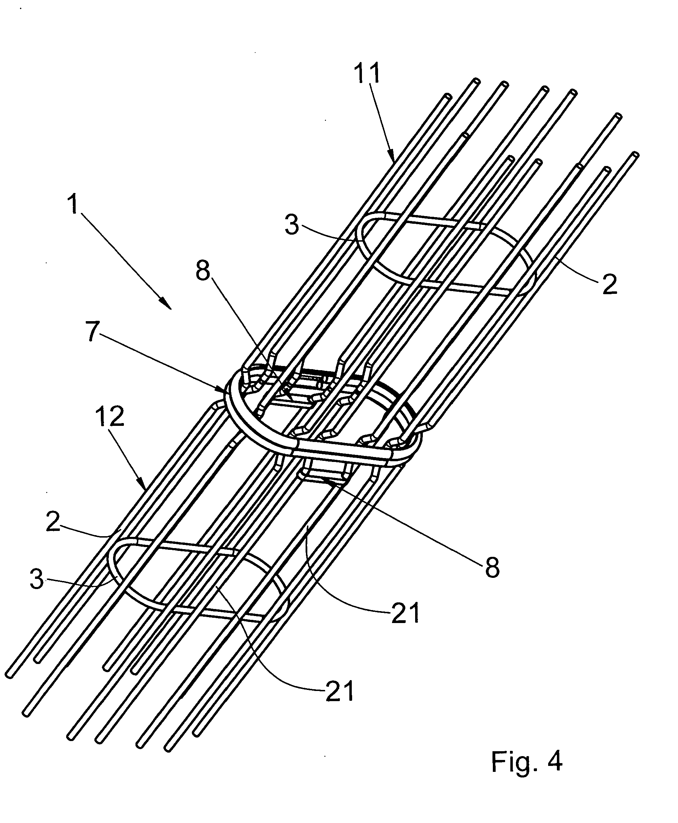

Sobald der Ring 5 im Kupplungsring 7 angeordnet ist, werden die Sicherungen 8 entlang der Längsstäbe 21 in Richtung der Kupplung 7 verschoben, bis sie den verjüngten Bereich erreicht haben (Figur 4). In dieser Position ist ein Zusammendrücken der Stäbe 21 nicht mehr möglich, so dass der Filterstützkorb gegen unbeabsichtigtes Öffnen der Verbindung der benachbarten Korbteile 11, 12 gesichert ist. Bei der oben beschriebenen alternativen Ausbildung der Sicherung 8 in Form von zu öffnenden Ösen 81 oder der Ausbildung der Ösen 81 in Form von Teilringen besteht selbstverständlich auch die Möglichkeit, die Sicherung 8 erst nach der Verbindung der benachbarten Korbteile an dem Korbteil 12 anzubringen.

Mit der Erfindung ist eine Sicherung gegen unbeabsichtigtes Öffnen der Verbindung zweier Korbteile 11, 12 hervorgerufen. Die erfindungsgemäße Sicherung ist nicht lediglich auf die Verwendung bei ovalen Filterstützkörben beschränkt; vielmehr ist sie bei allen Filterstützkorbarten und - Ausbildungen anwendbar, die mit einem Spalt bzw. einer Unterbrechung versehen sind. Sie ist zudem auch bei Filterstützkörben anwendbar, die ohne Verwendung eines Kupplungsrings miteinander verbunden sind.

## Patentansprüche

1. Filterstützkorb, bestehend aus Längsstäben (2) und Ringen (3), die über die Länge der Längsstäbe (2) verteilt angeordnet sind und an ihren Stirnseiten mit mindestens einem Ring (4, 5) versehen sind, wobei wenigstens einer der Ringe (4, 5) mit einem Spalt (6) versehen ist, **dadurch gekennzeichnet, dass** an den zu dem Spalt (6) benachbarten Längsstäben (21) eine Sicherung (8) vorgesehen ist.

2. Filterstützkorb nach Anspruch 1, **dadurch gekennzeichnet, dass** die Sicherung (8) entlang der Längsstäbe (21) verschiebbar ist.

3. Filterstützkorb nach Anspruch 1 oder 2, **dadurch gekennzeichnet, dass** an der Sicherung (8) Ösen (81) vorgesehen sind, in denen die zu dem Spalt (6) benachbarten Längsstäbe (21) geführt sind.

4. Filterstützkorb nach einem oder mehreren der vorgenannten Ansprüche, **dadurch gekennzeichnet, dass** die Ösen (81) mittels eines Steges (82) miteinander verbunden sind.
